**Europäisches Patentamt**

**European Patent Office**

**Office européen des brevets**

(11) Publication number: **0 490 830 B1**

## EUROPEAN PATENT SPECIFICATION

(45) Date of publication of patent specification: **08.03.95**  (51) Int. Cl.⁶: **F03D 5/06**

(21) Application number: **91830529.3**

(22) Date of filing: **02.12.91**

(54) **An apparatus for converting a reciprocating into a rotary motion, adapted to transform the kinetic energy of the wind into mechanical power.**

(30) Priority: **03.12.90 IT 890890 U**

(43) Date of publication of application:
**17.06.92 Bulletin 92/25**

(45) Publication of the grant of the patent:
**08.03.95 Bulletin 95/10**

(84) Designated Contracting States:
**AT BE CH DE DK ES FR GB GR IT LI LU NL SE**

(56) References cited:
**WO-A-90/08895**
**DE-A- 3 522 995**

**SOVIET INVENTIONS ILLUSTRATED, week
9120, 3rd July 1991, class O55, accessionno.
91-147195/20, Derwent Publications Ltd, London, GB; & SU-A-1574 898 (SANDUL V F)
30-06-1990**

(73) Proprietor: **IRME s.n.c.**
**Via Salvatore Grasso No. 24**
**I-95123 Catania (IT)**

(72) Inventor: **Italia, Sebastiano**
**Via Barriera 27**
**S. Giovanni Galenno - Catania (IT)**

(74) Representative: **Taliercio, Antonio et al**
**ING. BARZANO' & ZANARDO ROMA S.p.A.**
**Via Piemonte, 26**
**I-00187 Roma (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present state of the art for exploiting wind energy mainly to obtain electric power, is oriented in the following way, according to what it is known: the Countries which are most engaged in the study and the installation of aerogenerators of various sizes are the U.S., Denmark, the Netherlands, Canada, Great Britain, Western Germany, France, Sweden, and Italy, through different State Agencies for research as well as through private industries.

About twenty thousand machines, of medium and large sizes, are known to be operative almost all over the world corresponding to a total power of about 1,800 MW; however, with the expression "medium and large sizes" we mean 100 kW-4,000 kW aerogenerators. The generators already known are of the rotatable blade type, which in most cases is the two-blade or three-blade type, with horizontal axis and, in the case of some applications with vertical axis, with remarkable large sizes.

Indeed, blade diametres are employed of 32 m (250 kW), 60 m (2,000-3,000 kW), 78 m (4,000 kW), 90 m (2,500 kW), 98 m (3,200 kW).

Generally, such machines are grouped together according to the present tendencies into some tens of units, so realizing the so-called "WIND FARMS", but obviously costs are quite high as aeronautical techniques and composite materials are employed (some ten million dollars or German marks for some types capable of generating 3,000-4,000 kW).

Prior art document WO-A-90/08895 discloses a machine for extracting useful work from low-speed winds including a sail pivotally mounted to an arm for pivotal motion about a first axis and a base to which the arm is pivotally mounted for pivotal motion about a second axis that is parallel to the first axis. Through the use of a parallelogram linkage, the angle of the sail with respect to the base is made independent of the angle of the arm with respect to the base. This permits the angle of attack of the sail to be programmed to provide any desired motion of the arm with respect to the base.

The aerogenerator of this invention is suggested as an aerogenerator that transforms the wind kinetic energy directly into mechanical energy which is in turn transformed into electric energy, through a composite motion, from the reciprocating motion to a circular motion, said aerogenerator being of a conception different from that of the aerogenerators mentioned above.

In the case of size not very different from those of the machines which are already employed, it is estimated by means of calculations as reported herein below, that much higher powers can be obtained (per single unit);

The absolute absence of any kind of pollution, the convenient exploitation of a natural, not polluted, abundant and inexhaustible energy, the large power (unit groups) in addition to the large reliability, properties which are clearly put into evidence by calculations, make the aerogenerator a machine of outstanding importance for Man as well as for the very delicate echosystem in which Man lives.

The model shown herein (in the enclosed drawings) is to a 1:300 scale so that it has 36 m sides, and the details of said model, as mentioned in the disclosure, are put into evidence by identical letters in Figures 1, 2, 3, 4, 5, 6, 7, 8.

In the drawings:

Figure 1 shows a side vertical view of an aerogenerator according to this invention;

Figure 2 shows a front vertical view of said aerogenerator;

Figure 3 shows a rear vertical view of the same;

Figure 4 shows a plan view of said aerogenerator;

Figure 5 shows a side vertical view of an assembly of two aerogenerators according to this invention which are tandem coupled;

Figure 6 shows a plan view of the assembly illustrated in Figure 5;

Figure 7 shows a partial and detailed view of the orientable blades that form the operative surface of the aerogenerator according to the invention in the inactive position;

Figure 8 shows the assembly of the blades illustrated in Figure 7, in the active position;

Figures 9 and 10 are schematic views of an assembly of tandem generators which show the conditions in which the panel on the right performs an active stroke while the panel on the left is passive, and vice versa.

The aerogenerator is made up essentially of:

a plane rigid framework 10 having a regular geometric shape, which is square in most cases, and whose surface is large and faces the wind direction at right angles to the same, as regards one of its larger sides, so as to exploit the maximum dynamic pressure possible of the wind.

Said framework supports a regular set of flaps 11 which are of a suitable size and in suitable number.

Such flaps are integral in the sense of the length and in the central plane with the respective axes 12 which act as supports and whose ends are housed in bearings 13 which are housed in turn in the intermediate uprights 14 and in the outer frames 15 so that they can be free to rotate.

Said axes bear at one of their ends a rigid arm 16 (which is staggered by 45° with respect to the plane of the flap). A number of axes are connected simultaneously, through their rigid arms, to a tie 17 which is housed in a position close to the frame or close to an upright, so forming a connected set of articulated parallelogrammes.

The tie 17 is acted upon by a pneumatic, or an oleodynamic, or electromagnetic or a mechanical, or a mixed system, and said tie causes at the suitable moment the axes 12 connected to the same and then to the respective flaps 11 to rotate through 90°.

The driving system of said ties 17 is fully conventional, so that it does not come within the scope of this invention, and as a consequence anybody who is skilled in the art can adopt or design the system that he will consider as the most convenient.

When the wind panel is to receive the wind dynamic pressure, the flaps 11 are in the closed position, i.e. they offer their largest surface to the wind pressure, so that wind discharges its own kinetic energy onto said flaps and, through them, onto the whole framework; this is the active phase.

The whole wind panel 10, 11 is anchored at many points, with its side behind the side exposed to wind, to a frame carriage 18, whose sizes are designed in proportion to those of the panel mentioned above, said frame carriage being free to slide on straight and parallel guides 19. Such guides are anchored rigidly to a supporting base structure 20.

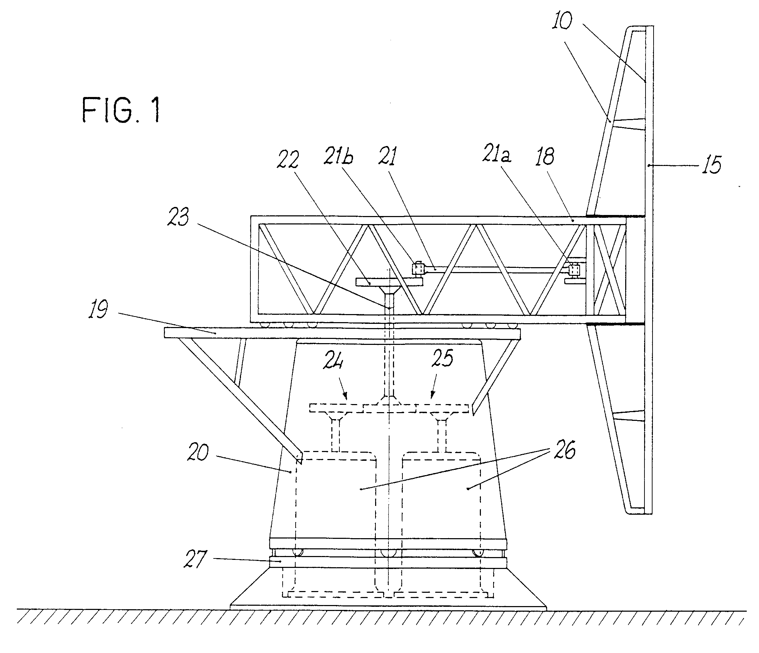

Said frame carriage 18, being integral with the wind panel 10, 11, transmits force to a connecting rod 21 which is anchored at an end 21a to its inner side, while it is anchored at the other end 21b to the crank pin of a driving wheel 22 or of a cam shaft which in turn transmits its motion to the inside of the supporting structure, by means of the transmission shaft 23, and through suitable gears (shown in Figure 1 as gear couplings in dashed line 24, 25) to one or more electric power generators 26.

Thus, said frame carriage performs a reciprocating motion, i.e. a to-and-fro motion, whose stroke is respectively equal to twice the size of the crank radius. In order to overcome the dead centres and to make the motion regular, a suitable flywheel can be provided (not shown).

In the back phase of the motion, the flaps are rotated by 90° and thay face the direction of the wind with their lower surface, i.e. with their own cross-sectional profile so as to oppose the minimum possible resistance to the wind strength.

The whole supporting structure rests on a circular guide base 27 with the possibility of rotating through 360° so as to allow the wind panel 10, 11 to have always the correct position in which it shows its whole surface to the direction of the wind.

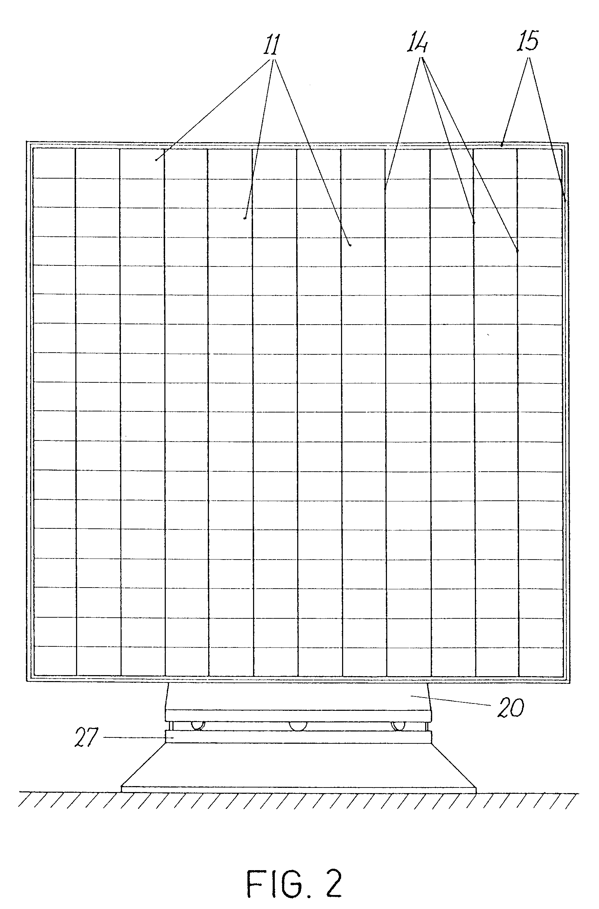

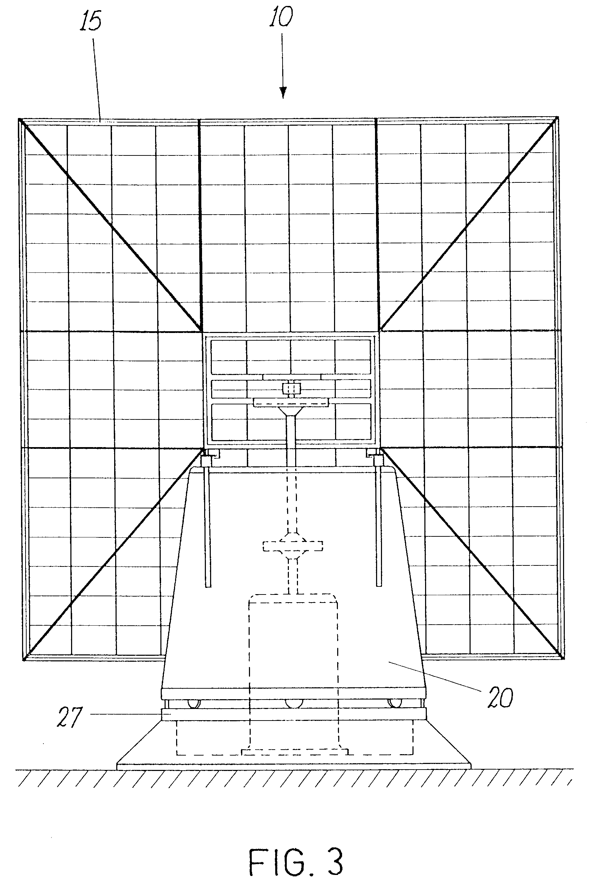

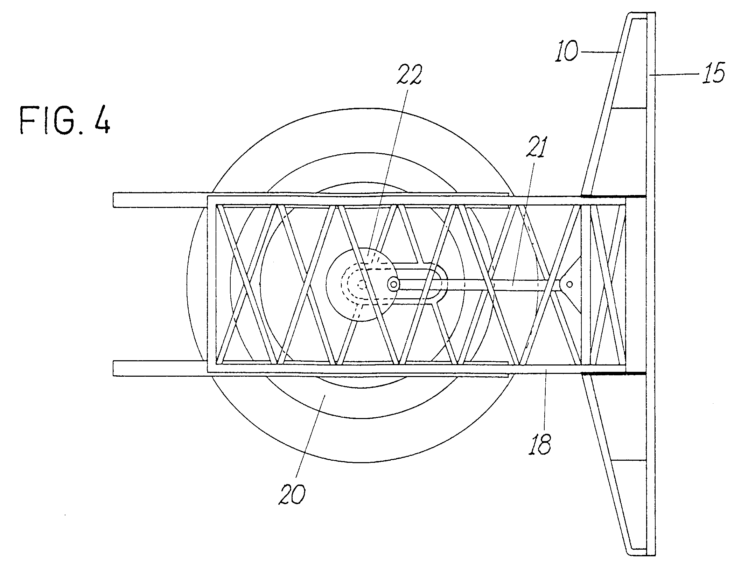

The structure illustrated up to the present moment makes use of a single useful stroke at each crank rotation, as the back stroke is passive so that in this case the wind panel is in the single version, Fig. 1 (side view), Fig. 2 (front view), Fig. 3 (rear view), Fig. 4 (top view).

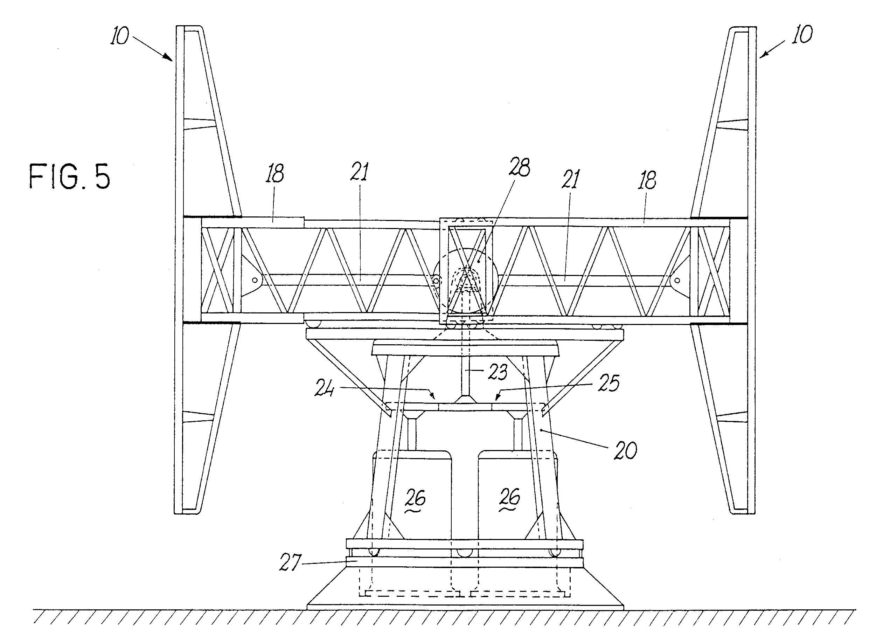

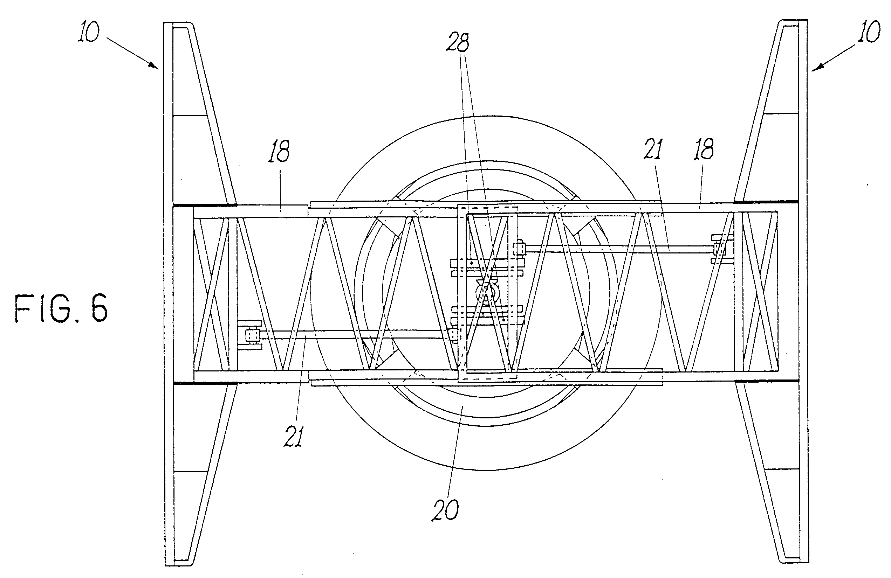

On the contrary, employing two frames 10, 11 opposite to one another and fastened to their respective frame carriages 18, whose connecting rods 21 are connected to two crank pins which are diametrically opposite to one another and hence with a 180° phase displacement, on two driving wheels 28 which are integral with one another; a tandem double-panel structure is obtained: Fig. 5 (side view), Fig. 6 (top view).

In case the crank wheels 28 are vertical, as occurs in Figures 5 and 6, a 90° transmission towards the shaft 23 is obviously provided.

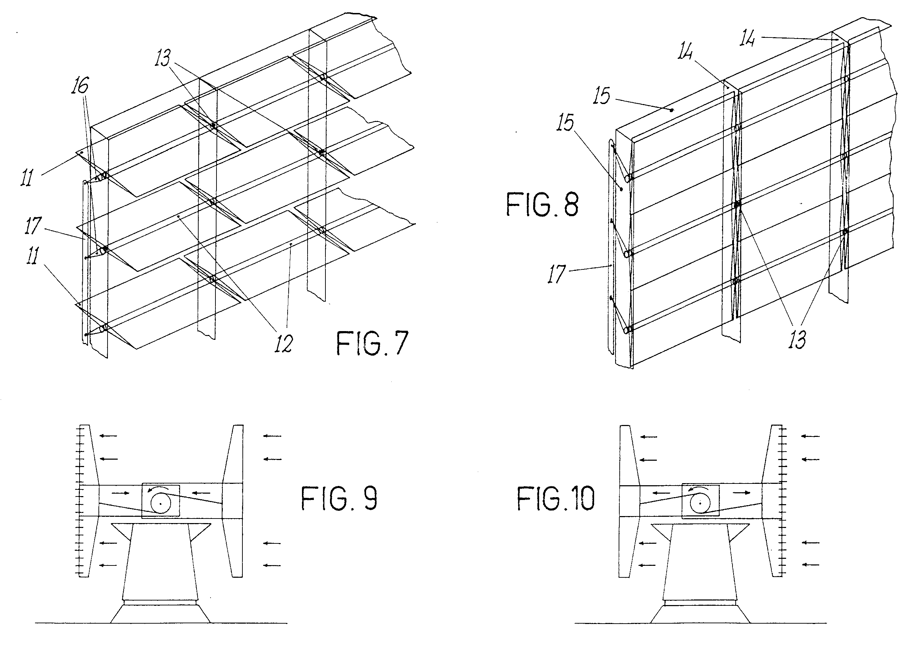

In that case, the passive stroke of the second panel corresponds to the useful stroke of the first panel. Once a half cycle of crank is completed, the functions are inverted, the inner side which is anchored of the second panel being exploited (the whole arrangement is put into evidence schematically in Fig. 9 and in Fig. 10). The generating machine in the double-panel version develops a double power with respect to the single-panel version, because there are two useful strokes at each crank cycle, with the same number of rounds per unit time.

The wind panel shown in the enclosed drawings has a total area of 1296 $m^2$, each single flap is of 2 x 3 m sizes so that there are 18 arrays of flaps, each array comprising 12 single flaps.

Two sets each one of six flaps are present in turn in each array, said flaps being integral with the same axle which is housed between a flap and the next one in suitable supports fastened to the uprights.

The ties, which drive the axles of the flaps are housed at ther edges of the two vertical frames of the panel; in particular, in Fig.7 the flaps are open, while in Fig.8 they are closed.

The calculations reported herein refer to a generating machine in the wind double-panel version.

The dynamic pressure of wind at the various speeds is as follows:

3

| WIND SPEED | | DYNAMIC PRESSURE in kg/m$^2$ | TOTAL PRESSURE IN kg on 1,296 m$^2$ |
|---|---|---|---|
| m/s | km/h | | |
| 11.2 | 40 | 7.84 | 10.161 |
| 12.5 | 45 | 9.78 | 12.649 |
| 13.9 | 50 | 12.07 | 15.643 |
| 15.3 | 55 | 14.63 | 18.960 |
| 16.7 | 60 | 17.43 | 22.589 |
| 18 | 65 | 20.25 | 26.244 |
| 19.4 | 70 | 23.52 | 30.482 |
| 20.8 | 75 | 27.04 | 35.044 |

The average torque ($M_t$) at the driving wheel is given by

$M_t = F.r.\sin(\alpha + \beta)$

wherein F = the force transmitted to the connecting rod; r = radius of the driving wheel; $\sin(\alpha + \beta)$ = diagram of the driving wheel in which $\alpha$ = the instantaneous crank angle; $\beta$ = the instantaneous connecting rod angle; for $\pi$ (a half cycle) the value of about 0.7 has been assumed, so that:

| WIND SPEED km/h | TOTAL PRESSURE IN kg on 1,296 m$^2$ | r.sin($\alpha + \beta$) (m) | | $M_t$(kgm) |
|---|---|---|---|---|
| 40 | 10.161 | 2.2 | 0.7 | 15.648 |
| 45 | 12.649 | " | " | 19.479 |
| 50 | 15.643 | " | " | 24.090 |
| 55 | 18.960 | " | " | 29.198 |
| 60 | 22.589 | " | " | 34.787 |
| 65 | 26.244 | " | " | 40.416 |
| 70 | 30.482 | " | " | 46.942 |
| 75 | 35.044 | " | " | 53.968 |

As the speed of the driving wheel is kept constant (60 rpm), more than one generator (50 pole pairs; 60 rounds per minute = 50 Hz) can become operative at the various wind speeds with increasing pressures; hence, the power developed (kW) is given by:

$kW = M_t n/974$

wherein $M_t$ = average torque; n = number of rounds per minute (60 rpm in this instance); finally:

| WIND SPEED km/h | AVERAGE TORQUE $M_t$ (kgm) | POWER kW |
|---|---|---|
| 40 | 15.648 | 964 |
| 45 | 19.479 | 1.200 |
| 50 | 24.090 | 1.484 |
| 55 | 29.198 | 1.799 |
| 60 | 34.787 | 2.143 |
| 65 | 40.416 | 2.490 |
| 70 | 46.942 | 2.892 |
| 75 | 53.968 | 3.324 |

Taking into consideration the possibility of realizing wind panels of larger sizes, the following results are obtained:

4

| WIND SPEED km/h | WIND PANEL (60x60 m) 3,600 m² POWER kW | WIND PANEL (98x98 m) 9,604 m² POWER kW |
|---|---|---|
| 40 | 2.677 | 7.143 |
| 45 | 3.333 | 8.892 |
| 50 | 4.122 | 10.997 |
| 55 | 4.996 | 13.329 |
| 60 | 5.953 | 15.880 |
| 65 | 6.916 | 18.450 |
| 70 | 8.032 | 21.429 |
| 75 | 9.235 | 24.636 |

| WIND SPEED km/h | WIND PANEL (200x200 m) POWER kW | WIND PANEL (360x360 m) POWER kW |
|---|---|---|
| 40 | 29.753 | 96.400 |
| 45 | 37.037 | 120.000 |
| 50 | 45.802 | 148.400 |
| 55 | 55.524 | 179.900 |
| 60 | 66.141 | 214.300 |
| 65 | 76.851 | 249.000 |
| 70 | 89.259 | 289.200 |
| 75 | 102.592 | 332.400 |

The absorption of power caused by the aerodynamic resistance in the passive phase as well as by mechanical resistances, rolling resistances and so on is to be considered as equal to about 2-3 % of the power developed.

**Claims**

1. An aerogenerator apparatus for converting a reciprocating motion into a rotary motion, adapted to transform the kinetic energy of the wind into mechanical power, characterized in that it comprises at least one panel (10, 11, 15) consisting of a frame (10) and of an outer frame (15) in which a plurality of flaps (11) are assembled, said flaps being rotatable around their respective axes (12) between an active position and an inactive position, said panel (10, 11, 15) being assembled on a frame carriage (18) which can slide on straight guides (19) according to an alternating motion; a crank mechanism (21, 22) which transforms the alternating motion of said panels (10, 11, 15) into a circular motion and transmits this circular motion through a transmission shaft (23) and through one or more rotatable couplings (24, 25) to one or more electric current generators (26); said straight guides (19) being supported by a supporting base (20) which can be oriented through a 360° angle on a circular guiding base (27);

2. An aerogenerator apparatus according to claim 1, characterized in that the axes (12) that support the flaps (11) are supported at their ends by bearings (13) housed within said outer frame (15) and within intermediate uprights (14) of said panel (10, 11, 15).

3. An aerogenerator apparatus according to claim 1, characterized in that in the active position said flaps (11) are arranged on the same plane as the panel and they face the direction of wind with their maximum surface area and, in the inactive position at right angles with respect to the active position such flaps are arranged at 90° with respect to the panel plane and they exert the minimum value of resistance to the wind.

4. An aerogenerator apparatus according to claims 2 and 3, characterized in that said axes (12) which support the flaps (11) bear at their ends rigid arms (16) which are interconnected by means of a tie (17) for forming a connected set of articulated parallelograms.

5. An aerogenerator apparatus according to claim 4 characterized in that a driving system is provided which acts upon said tie (17) for orienting said flaps (11) between their active/inactive positions, said system being selected from among pneumatic, oleodynamic, electromagnetic, mechanical and mixed systems.

6. An aerogenerator apparatus according to claim 4, characterized in that said rigid arms (16) are staggered by 45° with respect to the planes of said flaps (11).

7. An aerogenerator apparatus according to claim 1, characterized in that said crank mechanism comprises a connecting rod (21) which is articulated at one end (21a) to the frame (10) of said panel and, at the other end (21b), to a crank pin which is driven by a driving wheel (22) integral with said transmission shaft (23).

8. An aerogenerator apparatus according to claim 1, characterized in that said crank mechanism comprises a connecting rod (21) which is articulated at one end (21a) to the frame (10) and, at the other end (21b) to a crank integral with said transmission shaft (23).

9. An aerogenerator apparatus according to anyone of the preceding claims, characterized in that said transmission shaft bears a flywheel.

10. An aerogenerator apparatus according to claim 1, characterized in that it comprises a pair of panels (10, 11, 15) and the respective frame carriages (18) which can slide on straight guides (19) and are connected by means of separate crank mechanisms (21, 22) to a common transmission shaft, and in that the crank mechanisms for interconnecting the two panels to the common transmission shaft (23) as well as the systems for orienting the flaps (11) are 180° out-of-phase, so that the inactive stroke of a panel corresponds to the active stroke of the other one, and vice versa.

**Patentansprüche**

1. Windbetaetigte Vorrichtung zur Umsetzung der kinetischen Windenergie in eine mechanische Energie, dadurch gekennzeichnet, dass sie mindestens eine, aus ainem inneren Rahmen (10) und einem aeusseren Rahmen (15) bestehende Platte enthaelt, in der eine Mehrzahl von Fluegeln (11) angeordnet ist, die um deren Achsen (12) zwischen einer Arbeitsstellung und einer Ruhestellung verschwenkbar sind, wobei diese Platte (10,11,15) an einen, auf geraden Fuehrungen (19) hin und her verfahrbaren geruestartigen Wagen (18) angebaut ist und eine Gestaengeanordnung (21,22) enthaelt, die die Hin- und Herbewegung der vorgenannten Platte (10,11,15) durch eine Uebertragungswelle und eine oder mehrere Drehkupplungen (24,25) auf einen oder mehrere Stromerzeuger uebertraegt; wobei die vorgenannten geraden Fuehrungen (19) durch eine Auflagebase (20) getragen sind, die auf einer kreisfoermigen Fuehrungsbase (27) bis 360° verdreht werden kann.

2. Windbetaetigte Vorrichtung nach Anspruch 1, dadurch gekennzeichnet, dass die die Fluegel (11) tragenden Achsen (11) an deren Enden durch Lager (13) getragen sind, die innerhalb des aeusseren Rahmens (15) und der Zwischenstaender (14) der vorgenannten Platte (10,11,15) untergebracht sind.

3. Windbetaetigte Vorrichtung nach Anspruch 1, dadurch gekennzeichnet, dass in der Arbeitsstellung die Fluegel (11) sich auf derselben Ebene wie die Platte befinden und zum Wind mit deren groessten Flaeche gerichtet sind und in deren zur Arbeitstellung rechwinkligen Ruhestellung diese Fluegel sich rechtwinklig zur Platten ebene befinden und einen kleinsten Widerstand dem Wind gegenueber leisten.

4. Windbetaetigte Vorrichtung nach Anspruch 4, dadurch gekennzeichnet, dass die vorgenannten, die Fluegel (11) tragenden Achsen (12) an deren Enden steife Arme (!&) aufweisen, die miteinander durch eine Zugstande (17) verbunden sind und so eine Serie von Gelenk-Parallelogrammen bilden.

5. Windbetaetigte Vorrichtung nach Anspruch 4, dadurch gekennzeichnet, dass eine Antriebsanordnung zur Verstellung der Fluegel (11) zwischen deren Arbeits- und Ruhestellung vorgesehen ist, wobei diese Antriebsanordnung unter den pneumatischen, oleodynamischen, elektromagnetischen, mechanischen Antrieben und deren Kombination ausgewaehlt werden kann.

6. Windbetaetigte Vorrichtung nach Anspruch 4, dadurch gekennzeichnet, dass die steifen Arme (16) gegenueber den Ebenen der Fluegel (11) um 45° versetzt sind.

7. Windbetaetigte Vorrichtung nach Anspruch 1, dadurch gekennzeichnet, dass die Gestaengeanordnung eine, an ihrem einen Ende (21a) mit dem Rahmen (10) der Platte gelenkig verbundene Kurbelstange (21) enthaelt, welche an ihrem anderen Ende an einen Kurbelzapfen angelenkt ist, der durch ein mit der Uebertragungswelle (23) einstueckiges Antriebsrad (22) angetrieben wird.

8. Windbetaetigte Vorrichtung nach Anspruch 1, dadurch gekennzeichnet, dass die Gestaengeanordnung eine, an ihrem einen Ende (21a) mit dem Rahmen (10) gelenkig verbundene Kurbelstange (21) enthaelt, deren anderes Ende (21b) an einen mit der Uebertragungswelle (23) einstueckigen Kurbelzapfen angelenkt ist.

9. Windbetaetigte Vorrichtung nach je einem der vorhergehenden Ansprueche, dadurch gekennzeichnet, dass die Uebertragungswelle ein Schwungrad traegt.

10. Windbetaetigte Vorrichtung nach Anspruch 1, dadurch gekennzeichnet, dass sie zwei Platten (10,11,15) und entsprechende geruestartige Wagen (18) enthaelt, die auf geraden Fuehrungen (19) gleitbar sind und durch getrennte Gestaengeanordnungen (21,22) mit einer gemeisamen Uebertragungswelle verbunden sind und dass die Gestaengeanordnungen zur Verbindung der beiden Platten mit der gemeinsamen Uebertragungswelle (23), sowie die Einrichtungen zur Verstellung der Fluegel (11) um 180° versetzt sind, so dass der unwirksamer Hub einer Platte dem wirksamen Hub der andere Platte entspricht und umgekehrt.

## Revendications

1. Dispositif éolien pour transformer un mouvement alternatif en rotation, capable de convertir l'énergie éolienne en énergie mécanique, caractérisé en ce qu'il comprend au moins un panneau (10,11,15) formé d'un châssis (10) et d'un châssis extérieur (15), dans lesquels une pluralité des ailettes (11) est montée, lesdites ailettes (11) étant tournable autour leur axes respectifs (12) entre une position active et une position inactive, lesdits panneaux (10,11,15) étant montés sur un chariot à cage (18) qui est susceptible de glisser à mouvement alternatif sur chemins droits (19); un mécanisme à manivelle (21,22) qui transforme le mouvement alternatif desdits panneaux (10,11,15) en un mouvement de rotation et transmet ce mouvement de rotation par un arbre de transmission (23) et par un ou plusieurs joints tournants (24,25) à un ou plusieurs générateurs d'électicité (26); ledits chemins droits (19) étant supportés par une base de support (20), qui peut être tournée de 360° sur une base de guide (27).

2. Dispositif éolien selon la revendication 1, caractérisé en ce que les axes (12) qui support les ailettes (1) sont supportés à leur bouts par des paliers (13) placés dans ledit châssis extérieur (15) et dans les montants intermédiaire (14) dudit panneau (10,11,15).

3. Dispositif éolien selon la revendication 1, caractérisé en ce que dans la position active lesdites ailettes (11) sont placées sur le même plan du panneau et les leur faces sont tournées vers la direction du vent avec leur air de surface maximum et dans leur position inactive, qui forme un angle droit au regard de la position active, les ailettes sont placées à 90° au regard du plan du panneau et exercent le moindre valeur de résistance au vent.

4. Dispositif éolien selon les revendications 2 et 3, caractérisé en ce que lesdites axes (12), qui supportent les ailettes (11), supportent au leur bouts des bras rigides (16) qui sont reliés au moyens d'un tringle (17) pour former une série jointe des parallélogrammes articulés.

5. Dispositif éolien selon la revendication 4, caractérisé en ce qu'il comprend un système de commande, qui agit sur ledit tringle (17) pour orienter lesdites ailettes (11) entre leur positions active et inactive, ledit système étant choisi entre des systèmes pneumatique, oleodynamique, electromagnetique, méccanique et leur combination.

6. Dispositif éolien selon la revendication 4, caractérisé en ce que lesdits bras rigides (16) sont décalés de 45° au regard des plans desdites ailettes (11).

7. Dispositif éolien selon la revendication 1, caractérisé en ce que ledit mécanisme à manivelle comprend une bielle (21), qui est articulée à un bout (21a) au châssis dudit panneau et à l'autre bout (21b) à un tourillon de manivelle, qui est actioné par une roue de commande (22), intégrale avec ledit arbre de transmission (23).

8.  Dispositif éolien selon la revendication 1, caractérisé en ce que ledit mécanisme à manivelle comprend une bielle (21), qui est articulé à un bout (21a) au châssis dudit panneau et à l'autre bout (21b) à une manivelle, integrale avec ledit arbre de transmission (23).

9.  Dispositif éolien selon une quelconque des revendications précédentes, caractérisé en ce que ledit arbre de transmission porte un volant.

10.  Dispositif éolien selon la revendication 1, caractérisé en ce qui comprend une couple des panneaux (10,11,15) et des chariots à cage respectifs (18), qui sont suscetibles de glisser sur les chemins droits (19) et sont joints par les mécanisme à manivelle (21,22) separés à un arbre de transmission commun et en ce que les mécanismes à manivelle pour joindre les deux panneaux à l'arbre de transmission commun (23) ainsi que les systèmes pour orienter les ailettes (11) sont décalés de 180°, de sorte que la course inactive d'un panneau correspond à la course active de l'autre panneau et vice versa.

FIG. 1

FIG. 2

15  10

27  20

FIG. 3

FIG. 4

EP 0 490 830 B1

FIG. 5

FIG. 6

FIG. 7

FIG. 8

FIG. 9

FIG. 10

EP 0 490 830 B1